# EUROPEAN PATENT APPLICATION

(11) **EP 0 864 479 A1**
(43) Date of publication of application: **16.09.1998**
(21) Application number: 98200320.4
(22) Date of filing: 09.02.1998
(51) Int. Cl.: B62B 3/10

(54) **Shopping-trolley with bags/baskets**

(30) Priority: 12.02.1997 NL 1005257
(71) Applicant: Ramadhin, Soerindredath, 6836 CZ Arnhem (NL)
(72) Inventor: Ramadhin, Soerindredath, 6836 CZ Arnhem (NL)

(57) **Abstract**

It concerns a shopping-trolley (1...15), consisting of a set of tubes fit with crossbeams (1...20) where upon shoppingbags/-baskets (1...16) can be hung upon.

The cross-beams have at the ends singular (1...8) and double hooks (9...20) where upon shoppingbags/-baskets, fit with hanging clasps (1...28), can be hung upon.

On the upper first two cross-beams also a baby-seat (1...20) can be turned tightly by using a bipartite fastening-piece (1...10).

The concerning shopping-trolley can be produced in at least five models, among wich one model is particularly demountable.

## Description

It concerns a shopping-trolley, consisting of a set of tubes, fit with cross-beams where upon shopping-bags/-baskets can be hung upon.

### Model ONE.

Starts from point 1 and ends at point 15.

Points 1 up to and including 4 represent the four wheels of the shopping-trolley in essence, point 5 up to and including 16 represent the vertical boudaries of the bottom in the form of triangles, placed on regular distances of each other.

Points 1 up to and including 20 are the cross-beams. On the cross-beams, the points 1 up to and including 8 are singular hooks and the points 9 up to and including 20 are double hooks where upon the shoppingbags/-baskets are to be hung upon.

Points 1 up to and including 16 represent the form, in several magnitudes and widths, of the shoppingbags/-baskets concerned.

Points 1 up to and including 14, taking into account that points 13 and 14 represent a handgrip, and the points 15 up to and including 28, taking into account that points 27 and 28 represent also a handgrip, are welded at the shoppingbags/-baskets and do represent hanging clasps.

The hanging clasps lead one half way up and are the other half right and left way bended.

The shoppingbags/-baskets are to be hung by means of the hanging clasps onto the singular and double hooks, welded on the cross-beams on the cross-beams themselves.

Points 1 up to and including 20 represent a baby-seat.

Points 1 up to and including 4 and points 5 up to and including 8 represent a bipartite fastening-piece, a part of wich is welded at the foot of the baby-seat, each part is provided with two holes, point 9 and is triangley cogged, point 10.

By using nuts and bolts the baby-seat is to be turned tightly on the upper first two cross-beams by using the bipartite fastening-piece.

Model ONE-A, this one is particularly demountable.

This model differs from model ONE in the sense that it is demountable.

Shoppingbags/-baskets with hanging clasps, the baby-seat with matching bipartite fastening-piece are the same as described in the case of model ONE, being non-demountable.

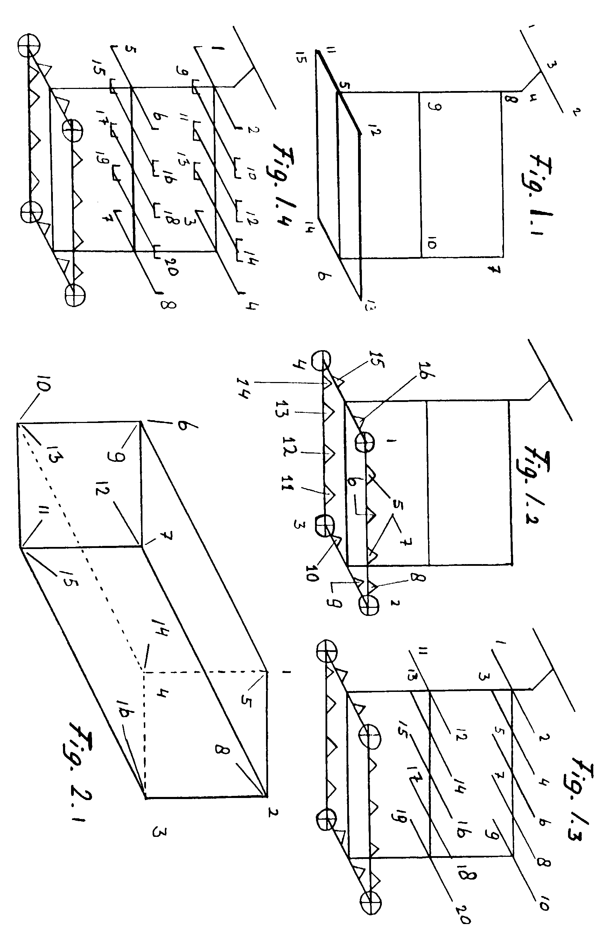

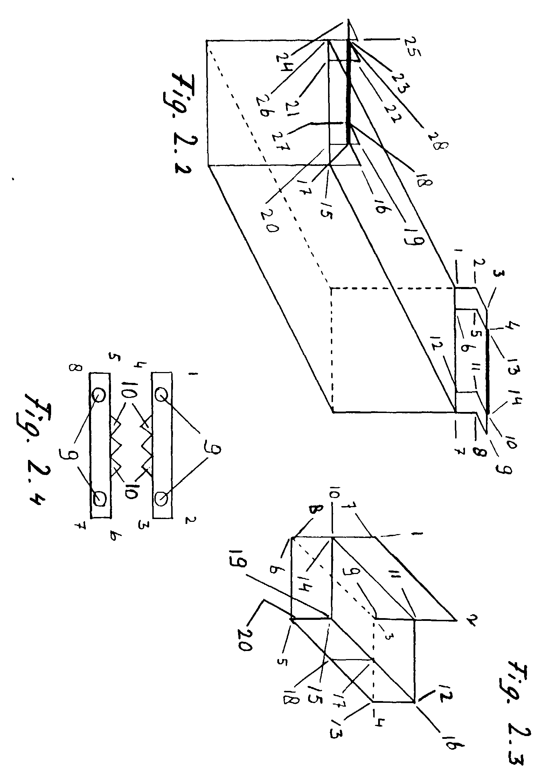

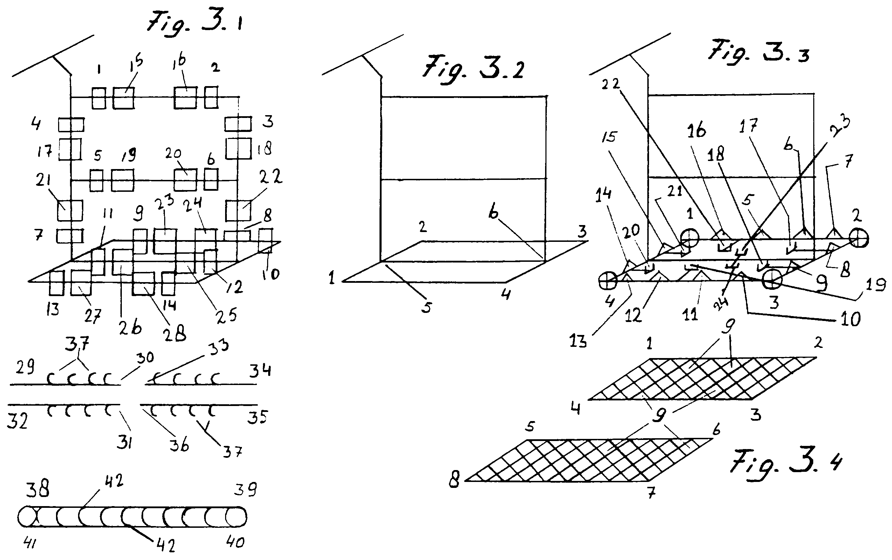

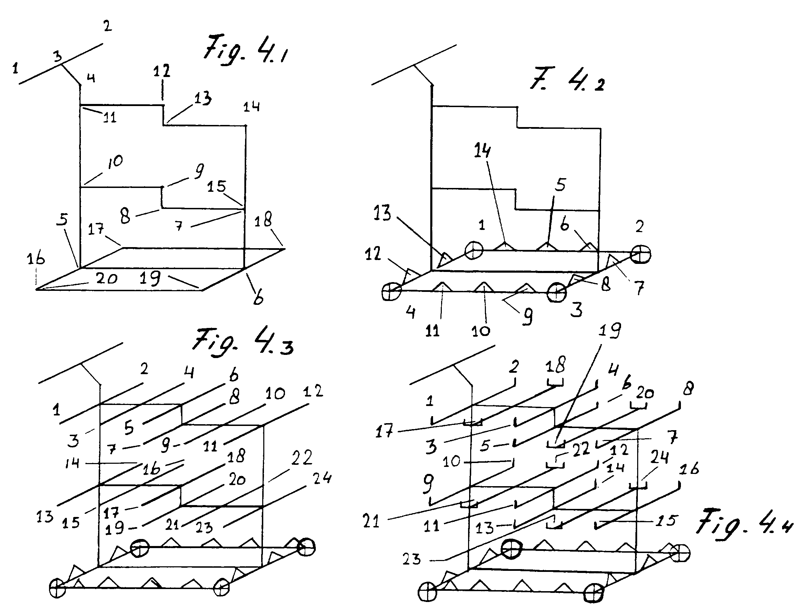

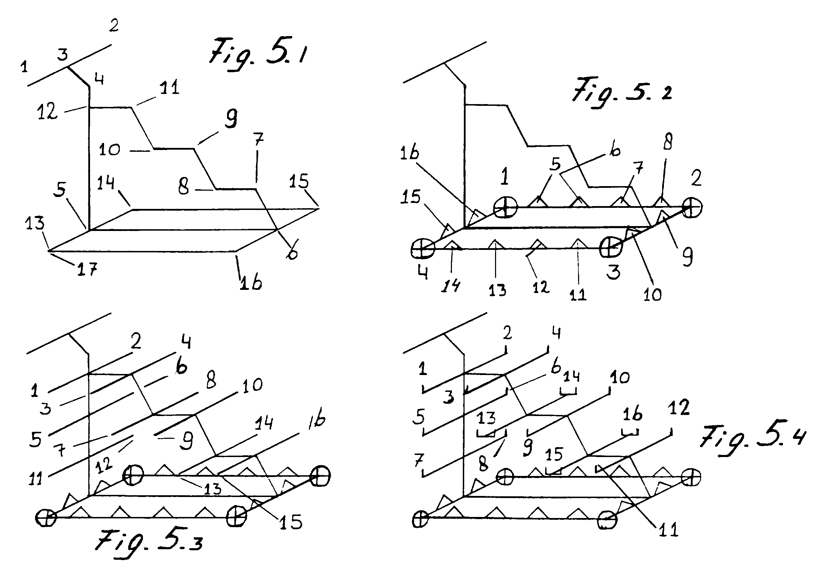

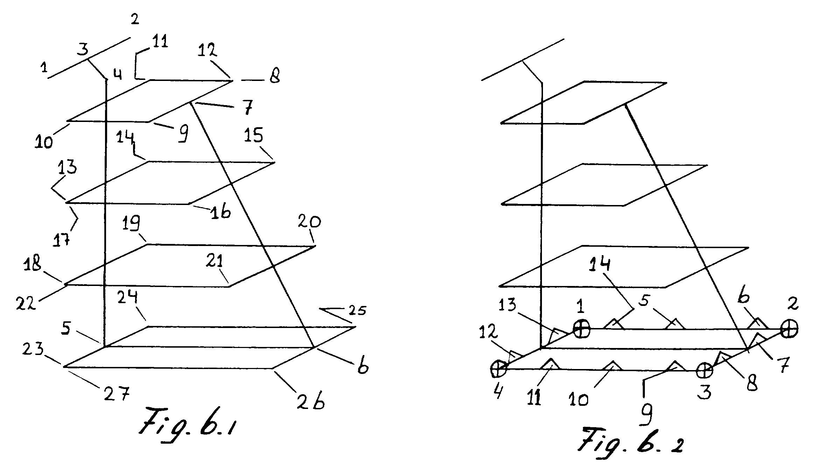

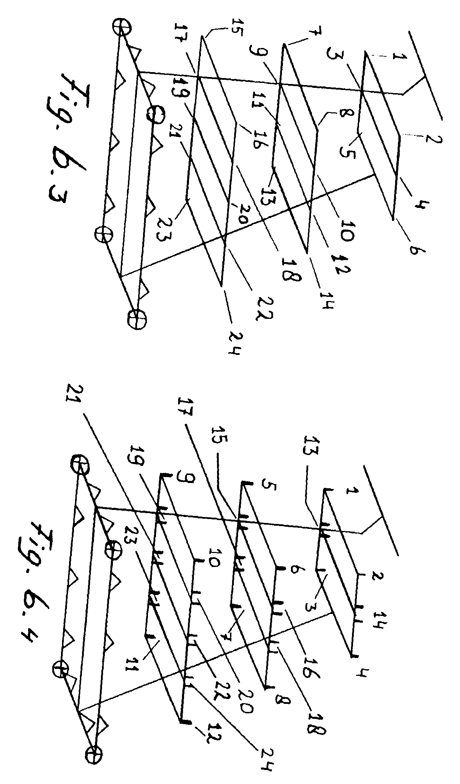

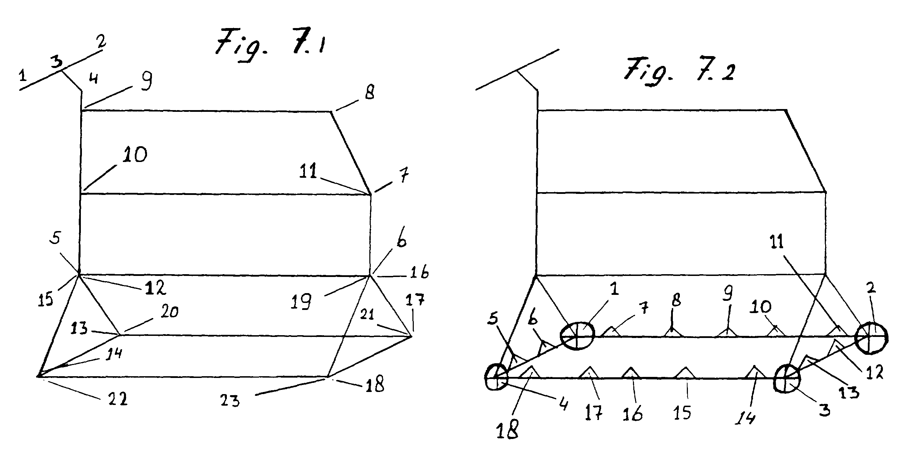

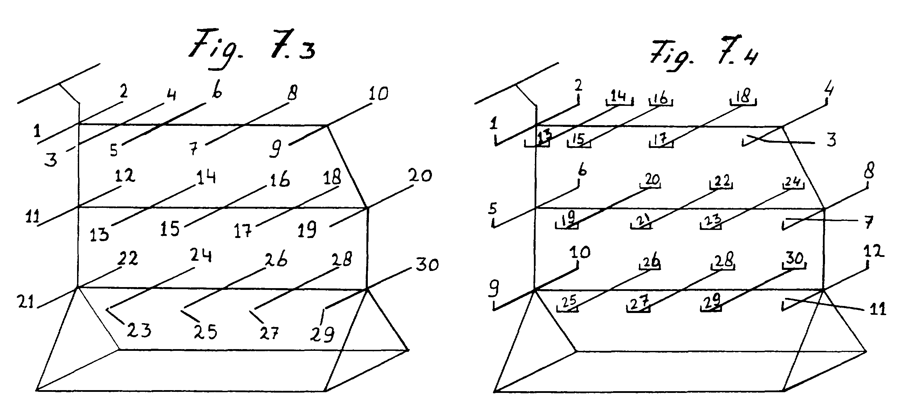

As one can see from the drawing the demountability is stated by the points 1 up to and including 14 and this model can be pulled to pieces or put together with the help of the points 15 up to and including 28.

Points 1 up to and including 14 are on both sides at the outside grooved, see also points 29 up to and including 32 and 33 up to and including 36.

Points 15 up to and including 28 represent a, at the inside grooved, fastening-piece, see also points 38 up to and including 41.

Points 15 up to and including 28 see to that the shopping-trolley can be made demountable aswell as can be put tightly together in connexion with the points 1 up to and including 14.

Point 37 states that the points 1 up to and including 14 are grooved at the outside.

Point 42 states that the points 15 up to and including 28 are grooved at the inside.

Points 1 up to and including 6 represent the bottom of the shopping-trolley.

Points 1 up to and including 4 represent the four wheels of the shopping-trolley, points 5 up to and including 16 represent the vertical boundaries of the bottom of the shopping-trolley in the form of triangles, placed on regular distances of each other, the points 17 up to and including 24 represent a double hook, welded at the bottom, on wich a bipartite grid is placed.

Points 1 up to and including 4 and points 5 up to and including 8 represent the bipartite grid, point 9 emphasizes that it is specificly about grids.

The grids are welded at the bottom of the other models.

### Model TWO.

Form of this model is represented by points 1 up to and including 20, differs from model ONE, in the sense that one half of the cross-beams in relationship with the other half lays lower.

Points 1 up to and including 4 represent the four wheels of the shopping-trolley, points 5 up to and including 14 represent the vertical boundaries of the bottom of the shopping-trolley in the form of triangles, placed on regular distances of each other.

Points 1 up to and including 24 represent the cross-beams. On the cross-beams the points 1 up to and including 16 are singular hooks and the points 17 up to and including 24 are double hooks where upon the shoppingbags/-baskets, provided with hanging clasps, are to be hung upon.

The baby-seat is to be turned tightly on the upper first two cross-beams.

Shoppingbags/-baskets with hanging clasps, baby-seat with matching bipartite fastening-piece are the same as decribed in the case of the non-demountable model ONE.

### Model THREE.

Form of this model is represented by the points 1 up to and including 17.

Differs from the models ONE and TWO qua form essentially in the sense that the cross-beams gradually run downward.

Points 1 up to and including 4 are the four wheels of the shopping-trolley, the points 5 up to and including 16 represent the vertical boundaries of the bottom of the shopping-trolley in the form of triangles, placed on regular distances of each other.

The points 1 up to and including 16 represent the cross-beams of this model.

The points 1 up to and including 12 on the cross-beams represent singular hooks and the points 13 up to and including 16 represent double hooks where upon the shoppingbags/-baskets, provided with hanging clasps are to be hung upon.

The baby-seat is to be turned tightly on the upper first two cross-beams.

Shoppingbags/-baskets with hanging clasps, baby-seat with matching bipartite fastening-piece are the same as described in the case of the non-demountable model ONE.

### Model FOUR.

Starts from point 1 and ends at point 27.

Points 1 up to and including 4 represent the four wheels of the shopping-trolley, the points 5 up to and including 14 represent the vertical boundaries of the bottom of the shopping-trolley in the form of triangles, placed in regular distances of each other.

The points 1 up to and including 24 represent the cross-beams of this model.

On the cross-beams the points 1 up to and including 12 represent singular hooks and the points 13 up to and including 24 are representing double hooks.

The baby-seat is to be turned tightly on the upper first two cross-beams.

Shoppingbags/-baskets with hanging clasps, the baby-seat with matching bipartite fastening-piece are the same as described in the case of the non-demountable model ONE.

### Model FIVE.

Starts from point 1 and ends at point 23.

Points 1 up to and including 4 represent the four wheels of the shopping-trolley, the points 5 up to and including 18 represent the vertical boundaries of the shopping-trolley in the form of triangles, placed on regular distances of each other.

The points 1 up to and including 30 represent the cross-beams.

On the cross-beams the points 1 up to and including 12 are singular hooks and the points 13 up to and including 30 represent the double hooks.

The baby-seat is to be turned tightly on the upper first two cross-beams.

Shoppingbags/-baskets with hanging clasps, the baby-seat with matching bipartite fastening-piece are the same as described in the case of the non-demountable model ONE.

## Claims

It concerns a shopping-trolley (1...15), consisting of a set of tubes,

1. with the distinguishing mark that it is fit with crossbeams (1...20) with at the ends singular (1...8) and double hooks (9...20) where upon shoppingbags/-baskets (1...16) can be hung upon;

2. with the distinguishing mark that the shoppinbags/-baskets are fit with hanging clasps (1...28);

3. with the distinguishing mark that the baby-seat (1...20) is to be turned tightly on the upper first two cross-beams by using a bipartite fastening-piece (1...10);

4. with the distinguishing mark that it can be produced in at least five models, among wich one model is particularly demountable.
